# EUROPÄISCHE PATENTSCHRIFT

(11) **EP 1 567 365 B1**
(45) Veröffentlichungstag und Bekanntmachung des Hinweises auf die Patenterteilung: **07.01.2009**
(21) Anmeldenummer: 03795742.0
(22) Anmeldetag: 02.12.2003
(51) Int. Cl.: B60C 25/132

(54) **SPANNVORRICHTUNG FÜR FELGEN, INSBESONDERE ZUR REIFENMONTAGE**
CLAMPING DEVICE FOR RIMS, PARTICULARLY FOR MOUNTING TIRES
DISPOSITIF DE SERRAGE DE JANTES SERVANT EN PARTICULIER A MONTER DES PNEUS

(30) Priorität: 04.12.2002 DE 10256870
(43) Veröffentlichungstag der Anmeldung: 31.08.2005
(73) Patentinhaber: Schenck RoTec GmbH, 64293 Darmstadt (DE)
(72) Erfinder: THELEN, Dieter, 64397 Modautal (DE); ROGALLA, Martin, 64297 Darmstadt (DE); LEHR, Werner, 64397 Modautal (DE)
(74) Vertreter: Haar, Lucas Heinz Jörn
(86) Internationale Anmeldenummer: PCT/DE2003/003985
(87) Internationale Veröffentlichungsnummer: WO 2004/050393

(56) Entgegenhaltungen:
- GB-A- 789 512
- US-A- 1 793 863
- US-A- 1 850 053
- US-A- 6 039 104
- US-A1- 2002 162 633

## Beschreibung

Die Erfindung betrifft eine Vorrichtung zum Spannen der Felge eines Fahrzeugrades, insbesondere zur Reifenmontage, mit einer Ablage, auf welcher die Felge mit einer Seite ablegbar ist, und mit radial zur Felge bewegbaren Spannbacken zum Festspannen des der Ablage benachbarten Felgenrandes, wobei die Spannbacken mit der axialen Außenseite des Felgenrandes zusammenwirkende Anlageflächen und radial von außen an den Felgenrand andrückbare Spannklauen haben.

Zum Aufziehen eines Reifens auf die Felge eines Fahrzeugrades mit Hilfe einer Montagemaschine ist es erforderlich, das Fahrzeugrad auf dem Tisch der Montagemaschine in Position zu halten. Hierbei müssen die anzuwendenden Haltekräfte so groß sein, daß das Rad entgegen der auftretenden Montagekräfte sicher gehalten wird. Die Felge wird von Spannbacken festgeklemmt, wobei die Felgenachse im wesentlichen senkrecht steht. Der Reifen wird schräg auf die festgespannte Felge gelegt, wobei ein Teil seiner Schulter in Höhe des unteren Felgenrandes von einer Auflage gehalten wird. Ein umlaufendes Werkzeug drückt zunächst den ersten unteren Reifenwulst über den oberen Felgenrand. Anschließend wird der zweite Reifenwulst mit einem umlaufenden Werkzeug über den Oberen Felgenrand gedrückt. Bei diesem Vorgang muß der zweite Reifenwulst in das Tiefbett der Felge rutschen, damit der zweite Reifenwulst ohne Überdehnung über den oberen Felgenrand gedrückt werden kann. Bei manchen Felgen befindet sich das Tiefbett ungefähr auf halber Felgenhöhe, so daß der Reifen bei diesem Montageschritt sehr stark verformt werden muß. Da der auf dem Tisch aufliegende Reifen nicht ausweichen kann, kann diese Verformung zu einer Schädigung des Reifens führen.

Ein gattungsgemäße Vorrichtung der eingangs genannten Art ist aus US-A-6 039 104 bekannt. Die Vorrichtung weist eine ebene Platte auf, an der paarweise einander gegenüberliegende Spannbacken längs zweier sich rechtwinkelig kreuzender Achsen bewegbar sind. Die Spannbacken sind L-förmig und können in zwei unterschiedlichen Positionen an bewegbaren Trägern befestigt werden, wobei in jeder Position eine andere Spannklaue in Spannposition ist. Die Spannklauen befinden sich in einem Abstand oberhalb der Platte und haben nur kurze Ablageflächen, auf welche die zu spannende Felge auflegbar ist. Die Spannklauen müssen daher vor dem Spannen schon in die Nähe des Spanndurchmessers bewegt werden, damit die Felge abgelegt werden kann.

Bei einer aus US-A-1 793 863 bekannten Vorrichtung haben die Spannbacken jeweils zwei einander zugekehrte Spannklauen, von denen eine zum Umgreifen eines inneren Felgenrandes und die andere zum Umgreifen eines äußeren Felgenrandes ausgebildet ist. An den Spannbacken sind kleine Ablageflächen angeordnet, auf welche die Felge vor dem Spannen aufgelegt werden kann. Weicht die Position der Spannbacken zu sehr vom Felgendurchmesser ab, so sind die Ablageflächen wirkungslos.

Der Erfindung liegt die Aufgabe zugrunde, eine Spannvorrichtung der eingangs genannten Art so zu gestalten, daß die Felge zwischen den Spannbacken unabhängig von deren Stellung ablegbar ist und eine unzulässige Verformung der Reifen beim Aufziehen auf die Felge vermieden wird.

Erfindungsgemäß wird diese Aufgabe dadurch gelöst, daß zwischen den Spannbacken eine Ablage aus flexiblen Bändern angeordnet ist, auf der die Felge vor dem Festspannen mit einer Seite ablegbar ist, wobei die Anlageflächen der Spannbacken in der Ebene der Ablage und radial innerhalb der Spannklauen angeordnet sind, und daß auf der dem Felgenrand abgekehrten Rückseite wenigstens einer Spannklaue sich in axialer und radialer, sich von der Felge entfernenden Richtung ein Freiraum erstreckt.

Durch die erfindungsgemäße Gestaltung der Spannvorrichtung wird beim Aufziehen ein Ausweichen der Lauffläche des Reifens unter die Auflageebene der Felge ermöglicht, da unmittelbar hinter den Spannbacken bzw. Spannklauen ein ausreichend großer Freiraum zur Aufnahme des verformten Bereichs des Reifens vorgesehen ist. Im Reifen bildet sich daher keine in das Reifeninnere eindringende Beule, die eine Schädigung des Reifens verursachen kann. Besonders bei sogenannten Run-Flat-Reifen ist dies von großer Bedeutung.

Es sind Spannvorrichtungen für automatische Anlagen zum Montieren von Reifen bekannt, bei welchen die Felge des Fahrzeugrades auf zwei gegenüberliegenden Seiten zwischen entsprechend dem Felgenrand geformten Spannbacken gespannt wird. Diese Spannmethode erzeugt im Rand der Felge erhebliche Biegemomente, so daß die Gefahr besteht, daß das Fahrzeugrad bleibend verbogen wird. Um dies zu vermeiden, müssen die Spannkräfte der Spannvorrichtung entsprechend niedrig gehalten werden, was der Forderung nach einem sicheren Halten des Scheibenrades entgegensteht.

Damit die an der Felge bzw. dem Fahrzeugrad auftretenden Biegemomente im Vergleich zur erzielbaren Haltekraft klein bleiben, ist nach einem weiteren Vorschlag der Erfindung vorgesehen, daß die Spannvorrichtung zwei Paare von Spannbacken aufweist, deren Bewegungsbahnen einander, insbesondere rechtwinklig, kreuzen und daß ein die Spannbacken synchron in eine an die Felge des Fahrzeugrades angedrückte Spannposition bewegender Antrieb vorgesehen ist.

Bei der erfindungsgemäßen Spannvorrichtung greifen die Spannbacken an vier Seiten an der Felge an, wodurch sich die Biegebeanspruchung der Felge erheblich verringert. Es können daher höhere Spannkräfte zum Festhalten der Felge eingesetzt werden, ohne dadurch die Felge zu überlasten oder bleibend zu verformen. Eine gleichmäßige Verteilung der Spannkraft kann weiterhin noch dadurch begünstig werden, daß die Spannbacken an zwei in einem Abstand voneinander befindlichen Stellen an die Felge andrückbare Spannflächen haben.

Nach einem weiteren Vorschlag der Erfindung kann vorgesehen sein, daß die Spannbacken mittels reibungsarm geführter Schlitten an einem kreuzförmigen Träger gelagert sind. Um auf der Rückseite der Spannbacken ausreichenden Freiraum für die Reifenbewegung beim Montieren des Reifens zu schaffen, wird weiterhin vorgeschlagen, die Spannbacken an Stützen anzuordnen, die sich von den Schlitten bis zu einer oberhalb des kreuzförmigen Trägers befindlichen Ablage erstrecken. Auf diese Weise wird hinter den Spannbacken ein sich nach unten erstreckender Freiraum geschaffen, so daß der Reifen beim Aufziehprozeß nach unten ausweichen kann und nicht geknickt wird.

Der Antrieb der Spannbacken weist vorzugsweise ein Getriebe mit einer drehbaren Scheibe auf, deren Drehachse in der Mitte der Bewegungsbahnen der Spannbacken und rechtwinklig zu den Bewegungsbahnen verläuft, wobei jeder Spannbacken durch eine Stange mit der Scheibe verbunden ist, wobei die Stange mittels Gelenken an den Spannbacken und der Scheibe befestigt ist. Durch diese Gestaltung des Antriebs wird auf einfache Weise eine synchrone Bewegung der Spannbacken erreicht. Die Elastizität der die Spannkraft übertragenden Bauteile gewährleistet in Verbindung mit der Elastizität der gespannten Felge eine gleichmäßige Verteilung der Spannkräfte auf die einzelnen Spannbacken. Um die synchrone Bewegung der Spannbacken genau einstellen zu können, kann die Länge der einzelnen Stangen des Antriebs einstellbar sein.

Nach einem weiteren Vorschlag der Erfindung können die Spannbacken eine den Felgenrand übergreifende Spannklaue und eine in der Ebene der Ablage befindliche Auflagefläche haben, auf der die Felge in der Spannposition aufliegt. Hierdurch wird die Felge in der Spannposition ausschließlich von den Spannbacken gehalten. Die Ablage, auf der das Fahrzeugrad vor dem Spannen abgelegt wird, muß daher bei der Reifenmontage keine Haltekräfte aufnehmen.

Eine weitere vorteilhafte Ausgestaltung der Erfindung kann darin bestehen, daß die zwischen den Spannbacken angeordnete Ablage wenigstens zwei parallele, in einem Abstand voneinander angeordnete, flexible Bänder aufweist, die über Umlenkrollen an den Spannbacken eines Paares geführt sind und mit ihren Enden an dem kreuzförmigen Träger befestigt sind. Vorzugweise sind hierbei die flexiblen Bänder über erste Umlenkrollen geführt, die vor den Spannbacken angeordnet sind und an den ersten Umlenkrollen in Richtung auf den kreuzförmigen Träger umgelenkt werden. Danach werden auch die Bänder über zweite Umlenkrollen geführt, die zwischen der Ablageebene und dem kreuzförmigen Träger angeordnet sind, und durch diese in eine zur Ablageebene parallele Ebene umgelenkt, in der sich die Befestigungsstellen der Bänder an dem kreuzförmigen Träger befinden.

Die erfindungsgemäße Gestaltung der Ablage hat den Vorteil, daß sie sich unterschiedlichen Positionen der Spannbacken anpaßt, so daß die Spannvorrichtung für eine große Bandbreite von Felgendurchmessern verwendbar ist. Während der Bewegung der Spannbacken bleiben die Bänder in Ruhe, so daß die auf der Ablage befindlichen Fahrzeugräder bei der Spannbewegung nicht rutschen müssen und daher nicht verkratzt werden können. Es hat sich zudem als vorteilhaft erwiesen, daß die Felge beim Ablegen auf den Bändern kein Geräusch verursacht und infolge der Dämpfungswirkung der Bänder nicht von der Ablagefläche hochspringt. Durch das Umlenken der flexiblen Bänder über die an den Spannbacken angeordneten Umlenkrollen wird außerdem erreicht, daß sich die Ablage nicht auf der Rückseite über die Spannbacken hinaus erstreckt. Der dort gewünschte Freiraum für den Montageprozeß wird daher nicht durch Teile der Ablage beeinträchtigt.

Um die flexiblen Bänder der Ablage zu entlasten, können in der Mitte zwischen den Spannbacken an dem kreuzförmigen Träger Stützen angeordnet sein, auf denen die flexiblen Bänder aufliegen.

Zur Bewegung der Spannbacken und zur Erzeugung der Spannkraft sieht eine vorteilhafte Ausgestaltung der Erfindung vor, unterhalb der Ablageebene zwischen den Stützen zweier gegenüberliegender Spannbacken einen hydraulisch oder pneumatisch antreibbaren Hubzylinder anzuordnen, dessen Zylindergehäuse mit der Stütze des einen Spannbackens und dessen Kolbenstange mit der Stütze des anderen Spannbackens verbunden ist. Auf die beiden anderen, nicht mit dem Hubzylinder verbundenen Spannbacken wird die von dem Hubzylinder erzeugte Spannbewegung und Spannkraft über das die Spannbacken miteinander verbindende und ihre Bewegung synchronisierende Getriebe übertragen.

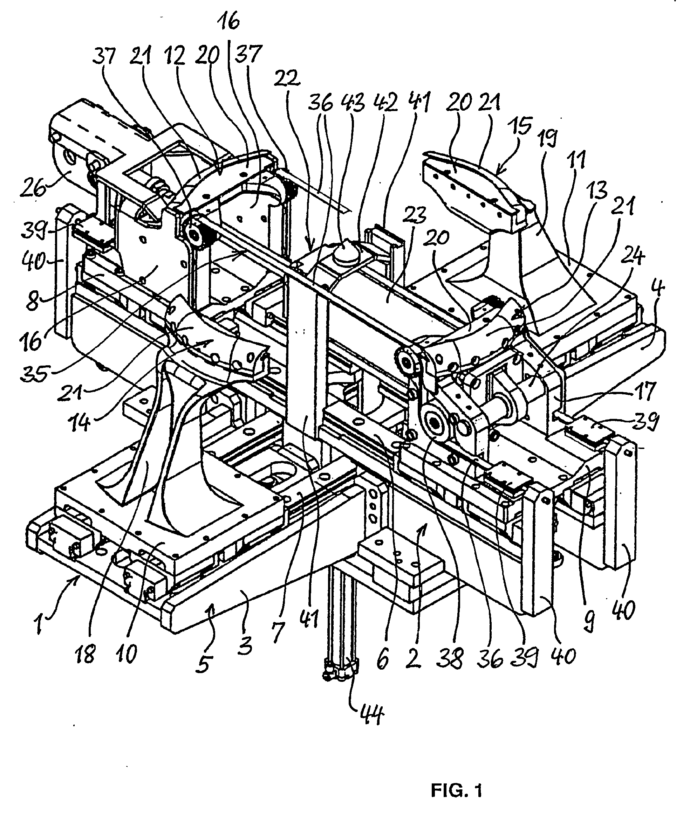

Die Erfindung wird nachfolgend anhand eines Ausführungsbeispiels näher erläutert, das in der Zeichnung dargestellt ist. Es zeigen
- Figur 1: eine perspektivische Darstellung einer zum Spannen von Kraftfahrzeugrädern bei der Reifenmontage bestimmten Spannvorrichtung,

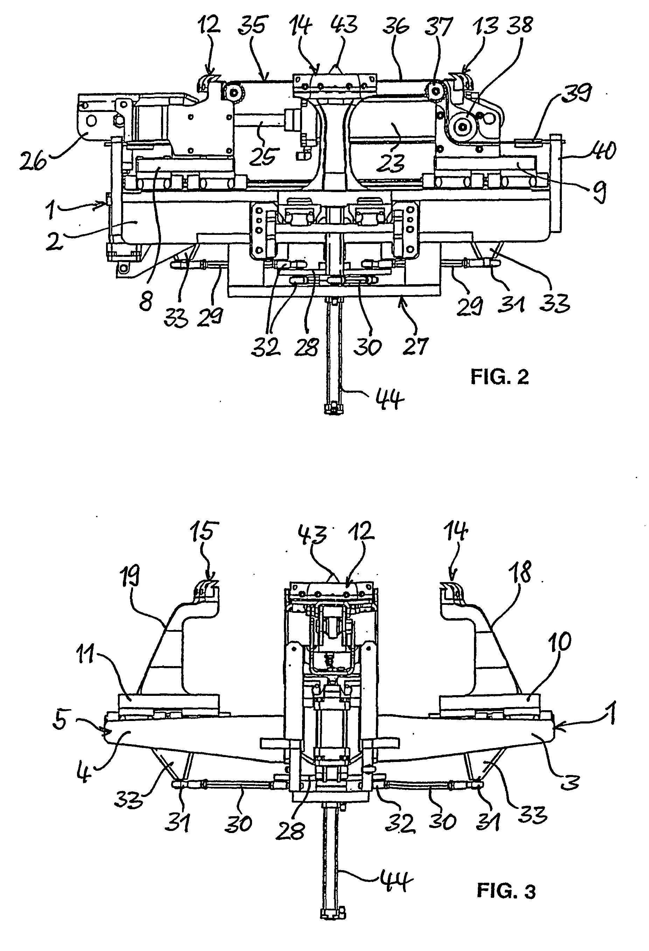

- Figur 2: eine erste Seitenansicht der Spannvorrichtung gemäß Figur 1 und
- Figur 3: eine zweite Seitenansicht der Spannvorrichtung gemäß Figur 1.

Die in der Zeichnung dargestellte Spannvorrichtung weist einen kreuzförmigen Träger 1 mit einem Längsholm 2 und einem aus zwei an den Längsholm 2 angesetzten Armen 3, 4 gebildeten Querholm 5 auf. Längsholm 2 und Querholm 5 sind rechtwinklig zueinander angeordnet. Auf der Oberseite sind an dem Längsholm 2 und an dem Querholm 5 parallele Führungsschienen 6, 7 angebracht. An den Führungsschienen 6 des Längsholms 2 sind zwei Schlitten 8, 9 mittels formschlüssiger Kugelführungen in Richtung der Längsachse des Längsholms 2 bewegbar gelagert. An den Führungsschienen 7 des Querholms 5 ist auf jeder Seite des Längsholms 2 ein Schlitten 10 bzw. 11 mittels formschlüssiger Kugelführungen in Längsrichtung des Querholms 5 bewegbar gelagert. Die Schlitten 8 bis 11 tragen jeweils einen Spannbacken 12, 13, 14, 15. Die Spannbacken 12, 13 sind jeweils durch zwei parallele, sich in Richtung der Führungsschienen 6 erstreckende Wände 16, 17 an den Schlitten 8, 9 abgestützt. Die Spannbacken 14, 15 sind an Stützen 18, 19 angebracht, die von den Schlitten 10, 11 getragen werden.

Die Spannbacken 12 bis 15 haben Ablageflächen 20, die in einer gemeinsamen, oberhalb der Stützen 18, 19 und der Wände 16, 17 befindlichen Ablageebene angeordnet sind und zur Ablage der Felge eines Fahrzeugrades in der Spannposition dienen. Angrenzend an die Ablageflächen 20 weisen die Spannbacken 12 bis 15 Spannklauen 21 auf, die in radialer Richtung an den Rand einer Felge andrückbar und so geneigt sind, daß sie den Felgenrand teilweise übergreifen. Die Spannklauen 21 haben einen konkav gekrümmten Mittelabschnitt, an den sich beiderseits im wesentliche gerade Abschnitte anschließen. Die gekrümmten Mittelabschnitte sind zum Spannen von Felgen kleineren Durchmessers bestimmt. Die geraden Abschnitte legen sich tangential an Felgen größeren Durchmessers an. Auf ihrer Rückseite sind die Spannklauen 21 mit einer Rundung versehen, die sich bis unter die Ablageebene erstreckt. Hierdurch wird eine den montierten Reifen schonende Kontur geschaffen. Die radiale Breite der Spannklauen 21 ist außerdem auf das zur Kraftübertragung erforderliche Mindestmaß beschränkt, um einen möglichst großen Freiraum für die Verformung des Reifens beim Aufziehen zu schaffen. Die axiale Höhe der Spannklauen 21 ist vorzugsweise nicht größer als diejenige des Felgenrandes.

Zum Bewegen der Spannbacken 12 bis 15 und zum Erzeugen der zum Halten eines Fahrzeugesrades geeigneten Spannkraft ist ein hydraulisch oder pneumatisch beaufschlagbarer Hubzylinder 22 vorgesehen. Der Hubzylinder 22 ist unterhalb der Ablageebene und im wesentlichen parallel zum Längsholm 2 angeordnet. Er weist ein Zylindergehäuse 23 auf, das mit seinem geschlossenen Ende an einem die Wände 17 verbindenden Zapfen 24 gelagert ist. Die Kolbenstange 25 des Hubzylinders 22 ist an einem Lagerbock 26 befestigt, der auf der Rückseite der Wände 16 angeordnet und an diesen befestigt ist. Hierdurch bleibt zwischen den Wänden 16 ein Freiraum erhalten, in den das Zylindergehäuse 23 eintauchen kann, wenn die Spannbacken 12, 13 zueinander bewegt werden.

Die Spannbacken 14, 15 werden synchron mit den Spannbacken 12, 13 längs der Führungsschiene 7 bewegt. Hierzu wird die Bewegung der Spannbacken 12, 13 durch ein an der Unterseite des Trägers 1 angeordnetes Getriebe 27 auf die Spannbacken 14, 15 übertragen. Das Getriebe 27 weist eine zentrale Scheibe 28 auf, die um eine in der Mitte zwischen den Spannbacken 12 bis 15 und senkrecht zur Ablageebene angeordnete Achse drehbar gelagert ist. Die Scheibe 28 ist durch vier Stangen 29, 30 gleicher Länge und an den Enden der Stangen 29, 30 angeordnete Gelenke 31, 32 mit den Schlitten 8 bis 11 verbunden. Jeder der Schlitten 8 bis 11 weist an seiner Unterseite eine nach unten ragende Stütze 33 auf, an der jeweils eine Stange 29, 30 mit dem Gelenk 31 drehbar befestigt ist. Mit dem anderen Gelenk 32 sind die Stangen 29, 30 an die Scheibe 28 angeschlossen, wobei die Gelenke 32 auf dem gleichen Teilkreis jeweils in einem Abstand von 90° auf der Scheibe 28 angeordnet sind. Zum Ausgleich von Herstellungsungenauigkeiten ist die Länge der Stangen 29, 30 einstellbar.

Werden die Schlitten 8, 9 gemeinsam mit den Spannbacken 12, 13 durch den Hubzylinder 22 zueinander oder auseinander bewegt, so wird diese Bewegung über die Stangen 29 auf die Scheibe 28 übertragen und diese dadurch in Drehung versetzt. Die Drehung der Scheibe 28 wird im umgekehrten Verhältnis durch die Stangen 30 auf die Schlitten 10, 11 und die von ihnen getragenen Spannbacken 14, 15 übertragen, so daß diese bezogen auf ihre Bewegungsbahn die gleiche Bewegung ausführen wie die Spannbacken 12, 13. Das Getriebe 27 gewährleistet außerdem, daß die Wege der Spannbacken 12 bis 15 relativ zur Drehachse der Scheibe 28 immer gleich sind, so daß die Räder beim Spannen in bezug auf die Drehachse zentriert werden.

Zwischen den Spannbacken 12, 13 ist eine Ablage 35 vorgesehen, auf der das Rad vor dem Festspannen mit einer Seite ablegbar ist. Die Ablage 35 besteht aus zwei parallelen, flexiblen Bändern 36, die in Höhe der Ablageebene zwischen den Spannbacken 12, 13 gespannt sind und deren Enden an den Enden des Längsholmes 2 befestigt sind. Die Bänder 36 sind über erste Umlenkrollen 37 geführt, die auf den einander zugekehrten Seiten der Spannbacken 12, 13 an diesen angeordnet sind. Von den Umlenkrollen 37 sind die Bänder 36 in Richtung des Längsholmes 2 zu zweiten Umlenkrollen 38 geführt. Die Umlenkrollen 38 sind an den Wänden 16, 17 angebracht. Von den Umlenkrollen 38 sind die Bänder 36 zu Befestigungselementen 39 geführt, an denen die Bandenden festgeklemmt sind. Die Befestigungselemente 39 sind mittels Spannschrauben an Leisten 40 gehalten, die an den Enden des Längsholmes 2 befestigt sind. Mit Hilfe der Spannschrauben können die Bänder 36 gespannt werden.

Die Umlenkrollen 37, 38 und die Befestigungselemente 39 sind so angeordnet, daß sich die Bänder 36 zwischen den Umlenkrollen 37 und zwischen den Befestigungselementen 39 und den Umlenkrollen 38 jeweils parallel zu den Führungsschienen 6 des Längsholmes 2 erstrecken. Werden die Spannbacken 12, 13 längs der Führungsschienen 6 bewegt, so hat dies keinen Einfluß auf die Spannung der Bänder 36. Durch die Umlenkung der Bänder 36 wird auf der Rückseite der Spannbacken 12, 13 ein Freiraum für die Montage des Reifens geschaffen.

In der Mitte zwischen den Spannbacken 12, 13 sind an dem Längsholm 2 zwei parallele Führungselemente 41 angebracht, die sich bis unter die Bänder 36 erstrecken und diese an dem Längsholm 2 abstützen. An den Führungselementen 41 ist eine Zentrierbrücke 42 verschiebbar gelagert, die den Hubzylinder 22 überspannt. Die Zentrierbrücke 42 weist auf ihrer Oberseite einen koaxial zur Drehachse der Scheibe 28 angeordneten Zentrierdorn 43 auf. Die Zentrierbrücke 42 ist durch eine an den Führungselementen 41 gelagerte Gabel mit einem Hubzylinder 44 verbunden, der unterhalb des Getriebes 27 angeordnet ist und dessen Kolbenstange sich durch das Lager der Scheibe 28 erstreckt. Mit Hilfe des Hubzylinders 44 kann der Zentrierdorn 43 in die Zentrierbohrung eines Rades hineinbewegt werden, um dieses beim Lösen der Spannbacken nach der Reifenmontage in zentrierter Lage zu halten.

## Patentansprüche

1. Vorrichtung zum Spannen der Felge eines Fahrzeugrades, insbesondere zur Reifenmontage, mit einer Ablage, auf welcher die Felge mit einer Seite auflegbar ist, und mit wenigstens zwei radial zur Felge bewegbaren Spannbacken (12 bis 15) zum Festspannen des der Ablage benachbarten Felgenrandes, wobei die Spannbacken (12 bis 15) mit der axialen Außenseite des Felgenrandes zusammenwirkende Anlageflächen (20) und radial von außen an den Felgenrand andrückbare Spannklauen (21) haben, **dadurch gekennzeichnet, daß** zwischen den Spannbacken (12, 13) eine Ablage (35) aus flexiblen Bändern (36) angeordnet ist, auf der die Felge vor dem Festspannen mit einer Seite ablegbar ist, wobei die Anlageflächen (20) der Spannbacken (12 bis 15) in der Ebene der Ablage (35) und radial innerhalb der Spannklauen (21) angeordnet sind und daß auf der dem Felgenrand abgekehrten Rückseite wenigstens einer Spannklaue (21) sich in axialer und radialer, von der Felge entfernenden Richtung ein Freiraum erstreckt.

2. Vorrichtung nach Anspruch 1, **gekennzeichnet durch** zwei Paare von Spannbacken (12 bis 15), deren Bewegungsbahnen einander, insbesondere rechtwinklig, kreuzen und daß ein die Spannbacken (12 bis 15) synchron in eine an die Felge des Fahrzeugrades angedrückte Spannposition bewegender Antrieb vorgesehen ist.

3. Vorrichtung nach Anspruch 2, **dadurch gekennzeichnet, daß** die Spannbacken (12 bis 15) an zwei in einem Abstand voneinander befindlichen Stellen an die Felge andrückbare Spannflächen haben.

4. Vorrichtung nach einem der vorhergehenden Ansprüche, **dadurch gekennzeichnet, daß** die Spannbacken (12 bis 15) mittels reibungsarm geführter Schlitten (8 bis 11) an einem kreuzförmigen (1) Träger gelagert sind.

5. Vorrichtung nach einem der vorhergehenden Ansprüche, **dadurch gekennzeichnet, daß** die Spannbacken (12 bis 15) an Stützen angeordnet sind, die sich von den Schlitten (8 bis 11) bis zu der oberhalb des kreuzförmigen Trägers (1) befindlichen Ablage erstrecken.

6. Vorrichtung nach einem der vorhergehenden Ansprüche, **dadurch gekennzeichnet, daß** der Antrieb ein Getriebe (27) mit einer drehbaren Scheibe (28) aufweist, deren Drehachse in der Mitte der Bewegungsbahnen der Spannbacken (12 bis 15) und rechtwinklig zu den Bewegungsbahnen verläuft, wobei jeder Spannbacken (12 bis 15) durch eine Stange (29, 30) mit der Scheibe (28) bewegungsübertragend verbunden ist, wobei die Stange (29, 30) mittels Gelenken an den Spannbacken (12 bis 15) und an der Scheibe (28) befestigt ist.

7. Vorrichtung nach Anspruch 6, **dadurch gekennzeichnet, daß** die Länge der Stangen (29, 30) einstellbar ist.

8. Vorrichtung nach einem der vorhergehenden Ansprüche, **dadurch gekennzeichnet, daß** die Spannklauen (21) der Spannbacken (12 bis 15) den Felgenrand übergreifen .

9. Vorrichtung nach einem der vorhergehenden Ansprüche, **dadurch gekennzeichnet, daß** die zwischen den Spannbacken (12 bis 15) angeordnete Ablage (35) wenigstens zwei parallele, in einem Abstand voneinander angeordnete, flexible Bänder (36) aufweist, die über Umlenkrollen (37, 38) an den Spannbacken (12, 13) eines Paares geführt sind und mit ihren Enden an dem kreuzförmigen Träger (1) befestigt sind.

10. Vorrichtung nach Anspruch 9, **dadurch gekennzeichnet, daß** die flexiblen Bänder (36) über erste, vor den Spannbacken (12, 13) angeordnete Umlenkrollen (37) geführt und an diesen in Richtung des kreuzförmigen Trägers (1) umgelenkt sind und danach über zweite, zwischen der Ablageebene und dem kreuzförmigen Träger (1) angeordnete Umlenkrollen (38) geführt und durch diese in eine zur Ablageebene parallele Ebene umgelenkt sind, in der sich die Befestigungsstellen der Bänder (36) an dem kreuzförmigen Träger (1) befinden.

11. Vorrichtung nach einem der Ansprüche 9 und 10, **dadurch gekennzeichnet, daß** an dem kreuzförmigen Träger (1) in der Mitte zwischen den Spannbacken (12, 13) Stützen angeordnet sind, auf denen die Bänder (36) aufliegen.

12. Vorrichtung nach einem der vorhergehenden Ansprüche, **dadurch gekennzeichnet, daß** unterhalb der Ablageebene zwischen den Stützen zweier gegenüberliegender Spannbacken (12, 13) ein hydraulisch oder pneumatisch antreibbarer Hubzylinder (22) angeordnet ist, dessen Zylindergehäuse (23) mit der Stütze des einen Spannbackens (13) und dessen Kolbenstange (25) mit der Stütze des anderen Spannbackens (12) verbunden ist.

13. Vorrichtung nach einem der vorhergehenden Ansprüche, **dadurch gekennzeichnet, daß** in der Mitte zwischen den Spannbacken (12 bis 15) ein Zentrierdorn (43) angeordnet ist, der senkrecht zur Ablageebene bewegbar ist.

## Claims

1. Device for clamping the rim of a vehicle wheel, in particular for mounting tires, having a shelf, on which the rim may be deposited by one side, and having at least two clamping jaws, which are movable radially relative to the rim for clamping the rim bead adjacent to the shelf, wherein the clamping jaws (12 to 15) comprise contact faces (20), which cooperate with the axial outer side of the rim bead, and clamping claws (21), which may be pressed onto the rim bead radially from the exterior, **characterized in that** a shelf 35 consisting of two parallel flexible belts 36 is arranged between the clamping jaws (12, 13) onto which shelf the wheel may be deposited by one side before it is clamped, wherein the contact faces (20) of the clamping jaws (12 to 15) are arranged radially between the clamping claws (21) at the level of the shelf plane (35) and **in that** a free space extends in the axial and radial direction leading away from the rim, on the back, turned away from the rim bead, of at least one clamping claw (21).

2. Device according to claim 1, **characterized by** two pairs of clamping jaws (12 to 15), of which the paths of movement intersect, in particular at right angles, and in that a drive, which synchronously moves the clamping jaws (12 to 15) into a clamping position pressed against the rim of the vehicle wheel, is provided.

3. Device according to claim 2, **characterized in that** the clamping jaws (12 to 15) comprise clamping faces which may be pressed against the rim at two mutually spaced points.

4. Device according to any one of the preceding claims, **characterized in that** the clamping jaws (12 to 15) are mounted on a cross-shaped carrier (1) by means of slides (8 to 11), which are guided with minimal friction.

5. Device according to any one of the preceding claims, **characterized in that** the clamping jaws (12 to 15) are arranged on supports, which extend from the slides (8 to 11) to a shelf located above the cross-shaped carrier (1).

6. Device according to any one of the preceding claims, **characterized in that** the drive comprises a gear unit (27) having a rotatable disc (28), of which the rotational axis extends in the centre of the paths of movement of the clamping jaws (12 to 15) and at right angles to the paths of movement, each clamping jaw (12 to 15) being connected to a disc (28) in a movement-transferring manner by a rod (29, 30), the rod (29, 30) being attached to the clamping jaws (12 to 15) and the disc (28) by means of joints.

7. Device according to claim 6, **characterized in that** the length of the rods (29, 30) is adjustable.

8. Device according to any one of the preceding claims, **characterized in that** the clamping claws (21) of the clamping jaws (12 to 15) overlap the rim bead.

9. Device according to any one of the preceding claims, **characterized in that** the shelf (35) that is arranged between the clamping jaws (12 to 15) comprises at least two mutually spaced, parallel flexible belts (36), which are guided on the clamping jaws (12, 13) of one pair via deflecting pulleys (37, 38) and which are attached to the cross-shaped carrier (1) by their ends.

10. Device according to claim 9, **characterized in that** the flexible belts (36) are guided over first deflecting pulleys (37) arranged before the clamping jaws (12, 13) and are deflected thereon in the direction of the cross-shaped carrier (1) and are then guided over second deflecting pulleys (38) arranged between the shelf plane and the cross-shaped carrier (1) and are deflected thereby into a plane, which is parallel to the shelf plane and contains the points for attaching the belts (36) to the cross-shaped carriers (1).

11. Device according to either claim 9 or claim 10, **characterized in that** supports, on which the belts (36) rest, are arranged on the cross-shaped carrier (1) centrally between the clamping jaws (12, 13).

12. Device according to any one of the preceding claims, **characterized in that** a hydraulic or pneumatic cylinder (22), of which the cylinder housing (23) is connected to the support of one clamping jaw (13) and of which the piston rod (25) is connected to the support of the other clamping jaw (12), is arranged below the shelf plane between the supports of two opposing clamping jaws (12, 13).

13. Device according to any one of the preceding claims, **characterized in that** a centring arbor (43), which is movable perpendicularly to the shelf plane, is arranged centrally between the clamping jaws (12 to 15).

## Revendications

1. Dispositif de serrage de la jante d'une roue de véhicule, en particulier pour le montage des pneus, comportant un élément d'appui sur lequel la jante peut être couchée avec une face, et comportant au moins deux mâchoires de serrage (12 à 15) mobiles radialement en direction de la jante et destinées à bloquer le rebord de la jante adjacent à l'élément d'appui, les mâchoires de serrage (12 à 15) étant munies de surfaces d'appui (20) coopérant avec le côté extérieur axial du rebord de la jante et de griffes de serrage (21) pouvant être appliquées radialement depuis l'extérieur contre le rebord de la jante, **caractérisé en ce qu'**entre les mâchoires de serrage (12, 13) est disposé un élément d'appui (35) formé par des bandes (36) flexibles, sur lequel la jante peut être posée avec une face avant le serrage, les surfaces d'appui (20) des mâchoires de serrage (12 à 15) étant disposées dans le plan de l'élément d'appui (35) et radialement à l'intérieur des griffes de serrage (21), et **en ce que** sur la face arrière opposée au rebord de la jante d'au moins une griffe de serrage (21) s'étend un dégagement en direction axiale et radiale en s'écartant de la jante.

2. Dispositif selon la revendication 1, **caractérisé par** deux paires de mâchoires de serrage (12 à 15), dont les voies de déplacement se croisent entre elles, en particulier à angle droit, et en ce qu'il est prévu un système d'entraînement déplaçant de manière synchrone les mâchoires de serrage (12 à 15) dans une position de serrage pressée contre la jante de la roue de véhicule.

3. Dispositif selon la revendication 2, **caractérisé en ce que** les mâchoires de serrage (12 à 15) comportent, au niveau de deux emplacements distants l'un de l'autre, des surfaces de serrage pouvant être pressées contre la jante.

4. Dispositif selon l'une des revendications précédentes, **caractérisé en ce que** les mâchoires de serrage (12 à 15) sont logées sur un support en croix (1) au moyen de chariots (8 à 11) aptes à se déplacer avec un faible frottement.

5. Dispositif selon l'une des revendications précédentes, **caractérisé en ce que** les mâchoires de serrage (12 à 15) sont disposées sur des éléments de soutien qui s'étendent depuis les chariots (8 à 11) jusqu'à l'élément d'appui situé au-dessus du support en croix (1).

6. Dispositif selon l'une des revendications précédentes, **caractérisé en ce que** le système d'entraînement comporte un engrenage (27) avec un disque (28) rotatif dont l'axe de rotation passe par le milieu des voies de déplacement des mâchoires de serrage (12 à 15) et en faisant un angle droit par rapport aux voies de déplacement, chaque mâchoire de serrage (12 à 15) étant reliée par une tige (29, 30) au disque (28) de manière à transmettre le mouvement, la tige (29, 30) étant fixée par des articulations aux mâchoires de serrage (12 à 15) et au disque (28).

7. Dispositif selon la revendication 6, **caractérisé en ce que** la longueur des tiges (29, 30) est réglable.

8. Dispositif selon l'une des revendications précédentes, **caractérisé en ce que** les griffes de serrage (21) des mâchoires de serrage (12 à 15) saisissent par le haut le rebord de la jante.

9. Dispositif selon l'une des revendications précédentes, **caractérisé en ce que** l'élément d'appui (35) disposé entre les mâchoires de serrage (12 à 15) comporte au moins deux bandes (36) flexibles parallèles et situées à distance l'une de l'autre, lesquelles sont guidées par le biais de poulies de renvoi (37, 38) sur les mâchoires de serrage (12, 13) d'une paire et sont fixées par leurs extrémités sur le support en croix (1).

10. Dispositif selon la revendication 9, **caractérisé en ce que** les bandes (36) flexibles sont guidées autour de premières poulies de renvoi (37) disposées devant les mâchoires de serrage (12, 13), et sont déviées sur celles-ci vers le support en croix (1), puis sont guidées autour de deuxièmes poulies de renvoi (38) disposées entre le plan de l'élément d'appui et le support en croix (1), et sont déviées sur celles-ci dans un plan parallèle au plan de l'élément d'appui et dans lequel se situent les points de fixation des bandes (36) sur le support en croix (1).

11. Dispositif selon l'une des revendications 9 et 10, **caractérisé en ce que** des éléments de soutien, sur lesquels reposent les bandes (36), sont disposés sur le support en croix (1), au milieu entre les mâchoires de serrage (12, 13).

12. Dispositif selon l'une des revendications précédentes, **caractérisé en ce que,** en dessous du plan de l'élément d'appui, entre les éléments de soutien de deux mâchoires de serrage (12, 13) se faisant face, est monté un vérin de levage (22) qui peut être actionné par voie hydraulique ou pneumatique, dont le carter (23) est relié à l'élément de soutien de l'une des mâchoires de serrage (13) et dont la tige de piston (25) est reliée à l'élément de soutien de l'autre mâchoire de serrage (12).

13. Dispositif selon l'une des revendications précédentes, **caractérisé en ce qu'**un mandrin de centrage (43), qui est mobile perpendiculairement au plan de l'élément d'appui, est monté au centre entre les mâchoires de serrage (12 à 15).
